(19) Europäisches Patentamt
European Patent Office
Office européen des brevets

(11) **EP 2 574 030 A1**

(12) **EUROPEAN PATENT APPLICATION**

(43) Date of publication:
**27.03.2013 Bulletin 2013/13**

(51) Int Cl.:
***H04N 1/00*** (2006.01)

(21) Application number: **12150145.6**

(22) Date of filing: **04.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.09.2011 US 201161538151 P**

(71) Applicants:
• **Cal-Comp Electronics & Communications Company Ltd.**
**New Taipei City 22201 (TW)**

• **Kinpo Electronics, Inc.**
**New Taipei City 22201 (TW)**

(72) Inventors:
• **Hsieh, Shih-Sen**
**22201 New Taipei City (TW)**
• **Chou, Chin-Yuan**
**22201 New Taipei City (TW)**

(74) Representative: **Becker Kurig Straus**
**Patentanwälte**
**Bavariastrasse 7**
**80336 München (DE)**

(54) **Product performance test system for scanner with automatic document feeder and method thereof**

(57) A product performance test system for a scanner with an automatic document feeder (ADF) and a method thereof are provided. The provided method includes: providing a test paper, where a plurality of standard test patterns relating to the performance of the scanner is drawn on the test paper; and controlling the scanner to feed the test paper for scanning, and analyzing the performance of the scanner according to a scan result generated after the scanner scans the test paper and all of the standard test patterns, so as to provide a plurality of test results relating to the performance of the scanner. Accordingly, the present invention can fast test the performance of the scanner with the ADF to let the tester know whether the scanner is good or bad.

FIG. 9

# Description

## BACKGROUND OF THE INVENTION

### 1. Field of the Invention

The present invention generally relates to a test technology, in particular, to a product performance test system for a scanner with an automatic document feeder (ADF) and a method thereof.

### 2. Description of Related Art

Current scanners have achieved the function of continuous scanning, and automatic document feeder (ADF) is one of important parts for the scanner to implement the function of continuous scanning. Therefore, the ADF has become an indispensable equipment for current medium and high level scanners. Generally, after a scanner with an ADF is produced, its performance needs to be tested in order to know whether the product is good or bad. However, as currently there is no test pattern and test algorithm specially designed for the scanner with the ADF, it is difficult for the tester to fast test the performance of the scanner with the ADF to know whether the scanner is good or bad.

## SUMMARY OF THE INVENTION

Accordingly, the present invention is directed to a product performance test system for a scanner with an ADF and a method thereof, which can fast test the performance of the scanner with the ADF to let the tester know whether the scanner is good or bad.

An exemplary embodiment of the present invention provides a product performance test system, which includes a scanner with an ADF, a test paper, and a test machine. A plurality of standard test patterns relating to the performance of the scanner is drawn on the test paper. The test machine is coupled to the scanner, and has all of the standard test patterns built therein. The test machine is used for controlling the scanner to feed the test paper for scanning, and analyzing the performance of the scanner according to a scan result generated after the scanner scans the test paper and all of the built-in standard test patterns, so as to provide a plurality of test results relating to the performance of the scanner.

In an exemplary embodiment of the present invention, all of the standard test patterns drawn on the test paper may include a registration standard test pattern, a whole magnification standard test pattern, a skew standard test pattern, a distortion standard test pattern, a partial magnification standard test pattern, a line standard test pattern, a resolution standard test pattern, a color shift standard test pattern, a uniformity standard test pattern, and a feeding smooth standard test pattern.

In an exemplary embodiment of the present invention, based on the registration standard test pattern drawn on the test paper, the scan result generated after the scanner scans the test paper may include a registration actual scan pattern. Under this condition, the test machine may determine by analyzing the registration standard test pattern and the registration actual scan pattern whether a scan registration of the ADF of the scanner is correct, and accordingly provide a scan registration test result relating to the ADF of the scanner.

In an exemplary embodiment of the present invention, based on the whole magnification standard test pattern drawn on the test paper, the scan result generated after the scanner scans the test paper may further include a whole magnification actual scan pattern. Under this condition, the test machine may determine by analyzing the whole magnification standard test pattern and the whole magnification actual scan pattern whether a whole scan magnification of the scanner is correct, and accordingly provide a whole scan magnification test result relating to the scanner.

In an exemplary embodiment of the present invention, based on the skew standard test pattern drawn on the test paper, the scan result generated after the scanner scans the test paper may further include a skew actual scan pattern. Under this condition, the test machine may determine by analyzing the skew standard test pattern and the skew actual scan pattern whether a feed angle of the ADF of the scanner is correct, and accordingly provide a skew test result relating to the ADF of the scanner.

In an exemplary embodiment of the present invention, based on the distortion standard test pattern drawn on the test paper, the scan result generated after the scanner scans the test paper may further include a distortion actual scan pattern. Under this condition, the test machine may determine by analyzing the distortion standard test pattern and the distortion actual scan pattern whether the test paper fed by the ADF of the scanner is distorted, and accordingly provide a distortion test result relating to the ADF of the scanner.

In an exemplary embodiment of the present invention, based on the partial magnification standard test pattern drawn on the test paper, the scan result generated after the scanner scans the test paper may further include a partial magnification actual scan pattern. Under this condition, the test machine may determine by analyzing the partial magnification standard test pattern and the partial magnification actual scan pattern whether a partial scan magnification of the scanner is correct, and accordingly provide a partial scan magnification test result relating to the scanner.

In an exemplary embodiment of the present invention, based on the line standard test pattern drawn on the test paper, the scan result generated after the scanner scans the test paper may further include a line actual scan pattern. Under this condition, the test machine may determine by analyzing the line standard test pattern and the line actual scan pattern whether the test paper fed by the ADF of the scanner shakes, and accordingly provide a shake test result relating to the ADF of the scanner.

In an exemplary embodiment of the present invention, based on the resolution standard test pattern drawn on the test paper, the scan result generated after the scanner scans the test paper may further include a resolution actual scan pattern. Under this condition, the test machine may determine by analyzing the resolution standard test pattern and the resolution actual scan pattern whether a scan resolution of the scanner complies with standards, and accordingly provide a scan resolution test result relating to the scanner.

In an exemplary embodiment of the present invention, based on the color shift standard test pattern drawn on the test paper, the scan result generated after the scanner scans the test paper may further include a color shift actual scan pattern. Under this condition, the test machine may determine by analyzing the color shift standard test pattern and the color shift actual scan pattern whether a scan color of the scanner is shifted, and accordingly provide a scan color test result relating to the scanner.

In an exemplary embodiment of the present invention, based on the uniformity standard test pattern drawn on the test paper, the scan result generated after the scanner scans the test paper may further include a uniformity actual scan pattern. Under this condition, the test machine may determine by analyzing the uniformity standard test pattern and the uniformity actual scan pattern whether a scan uniformity of the scanner is poor, and accordingly provide a scan uniformity test result relating to the scanner.

In an exemplary embodiment of the present invention, based on the feeding smooth standard test pattern drawn on the test paper, the scan result generated after the scanner scans the test paper may further include a feeding smooth actual scan pattern. Under this condition, the test machine may determine by analyzing the feeding smooth standard test pattern and the feeding smooth actual scan pattern whether the test paper fed by the ADF of the scanner is dragged or flattened, and accordingly provide a feeding smooth test result relating to the ADF of the scanner.

Another exemplary embodiment of the present invention provides a product performance test method for a scanner with an ADF, which includes: providing a test paper, where a plurality of standard test patterns relating to the performance of the scanner is drawn on the test paper; and controlling the scanner to feed the test paper for scanning, and analyzing the performance of the scanner according to a scan result generated after the scanner scans the test paper and all of the standard test patterns, so as to provide a plurality of test results relating to the performance of the scanner.

In an exemplary embodiment of the present invention, all of the standard test patterns drawn on the provided test paper may include a registration standard test pattern, a whole magnification standard test pattern, a skew standard test pattern, a distortion standard test pattern, a partial magnification standard test pattern, a line standard test pattern, a resolution standard test pattern, a color shift standard test pattern, a uniformity standard test pattern, and a feeding smooth standard test pattern.

In an exemplary embodiment of the present invention, based on the registration standard test pattern drawn on the test paper, the scan result generated after the scanner scans the test paper may include a registration actual scan pattern. Under this condition, the step of analyzing the performance of the scanner may include: determining by analyzing the registration standard test pattern and the registration actual scan pattern whether a scan registration of the ADF of the scanner is correct, and accordingly providing a scan registration test result relating to the ADF of the scanner.

In an exemplary embodiment of the present invention, based on the whole magnification standard test pattern drawn on the test paper, the scan result generated after the scanner scans the test paper may further include a whole magnification actual scan pattern. Under this condition, the step of analyzing the performance of the scanner may further include: determining by analyzing the whole magnification standard test pattern and the whole magnification actual scan pattern whether a whole scan magnification of the scanner is correct, and accordingly providing a whole scan magnification test result relating to the scanner.

In an exemplary embodiment of the present invention, based on the skew standard test pattern drawn on the test paper, the scan result generated after the scanner scans the test paper may further include a skew actual scan pattern. Under this condition, the step of analyzing the performance of the scanner may further include: determining by analyzing the skew standard test pattern and the skew actual scan pattern whether a feed angle of the ADF of the scanner is correct, and accordingly providing a skew test result relating to the ADF of the scanner.

In an exemplary embodiment of the present invention, based on the distortion standard test pattern drawn on the test paper, the scan result generated after the scanner scans the test paper may further include a distortion actual scan pattern. Under this condition, the step of analyzing the performance of the scanner may further include: determining by analyzing the distortion standard test pattern and the distortion actual scan pattern whether the test paper fed by the ADF of the scanner is distorted, and accordingly providing a distortion test result relating to the ADF of the scanner.

In an exemplary embodiment of the present invention, based on the partial magnification standard test pattern drawn on the test paper, the scan result generated after the scanner scans the test paper may further include a partial magnification actual scan pattern. Under this condition, the step of analyzing the performance of the scanner may further include: determining by analyzing the partial magnification standard test pattern and the partial magnification actual scan pattern whether a partial scan magnification of the scanner is correct, and accordingly providing a partial scan magnification test result relating to the scanner.

In an exemplary embodiment of the present invention, based on the line standard test pattern drawn on the test paper, the scan result generated after the scanner scans the test paper may further include a line actual scan pattern. Under this condition, the step of analyzing the performance of the scanner may further include: determining by analyzing the line standard test pattern and the line actual scan pattern whether the test paper fed by the ADF of the scanner shakes, and accordingly providing a shake test result relating to the ADF of the scanner.

In an exemplary embodiment of the present invention, based on the resolution standard test pattern drawn on the test paper, the scan result generated after the scanner scans the test paper may further include a resolution actual scan pattern. Under this condition, the step of analyzing the performance of the scanner may further include: determining by analyzing the resolution standard test pattern and the resolution actual scan pattern whether a scan resolution of the scanner complies with standards, and accordingly providing a scan resolution test result relating to the scanner.

In an exemplary embodiment of the present invention, based on the color shift standard test pattern drawn on the test paper, the scan result generated after the scanner scans the test paper may further include a color shift actual scan pattern. Under this condition, the step of analyzing the performance of the scanner may further include: determining by analyzing the color shift standard test pattern and the color shift actual scan pattern whether a scan color of the scanner is shifted, and accordingly providing a scan color test result relating to the scanner.

In an exemplary embodiment of the present invention, based on the uniformity standard test pattern drawn on the test paper, the scan result generated after the scanner scans the test paper may further include a uniformity actual scan pattern. Under this condition, the step of analyzing the performance of the scanner may further include: determining by analyzing the uniformity standard test pattern and the uniformity actual scan pattern whether a scan uniformity of the scanner is poor, and accordingly providing a scan uniformity test result relating to the scanner.

In an exemplary embodiment of the present invention, based on the feeding smooth standard test pattern drawn on the test paper, the scan result generated after the scanner scans the test paper may further include a feeding smooth actual scan pattern. Under this condition, the step of analyzing the performance of the scanner may further include: determining by analyzing the feeding smooth standard test pattern and the feeding smooth actual scan pattern whether the test paper fed by the ADF of the scanner is dragged or flattened, and accordingly providing a feeding smooth test result relating to the ADF of the scanner.

Based on the above, the present invention mainly aims to design special test patterns and test algorithms for the scanner with the ADF, for example, a scan registration test of the ADF of the scanner, a whole scan magnification test of the scanner, a skew test of the ADF of the scanner, a distortion test of the ADF of the scanner, a partial scan magnification test of the scanner, a shake test of the ADF of the scanner, a scan resolution test of the scanner, a scan color test of the scanner, a scan uniformity test of the scanner, and a feeding smooth test of the ADF of the scanner. Accordingly, the present invention can fast test the performance of the scanner with the ADF to let the tester know whether the scanner is good or bad.

It should be understood that the above general description and the following detailed description of the embodiments are merely exemplary and illustrative, but are not intended to limit the scope of the present invention.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic view of a product performance test system 10 according to an exemplary embodiment of the present invention.

FIG. 2 is a schematic view of a test paper 103 of FIG. 1.

FIG. 3 is a schematic view of scan results generated after the scanner scans the test paper.

FIG. 3(a) is a schematic view of a registration actual scan pattern relating to a registration standard test pattern of FIG. 2.

FIG. 3(b) is a schematic view of a whole magnification actual scan pattern relating to a whole magnification standard test pattern of FIG. 2.

FIG. 3(c) is a schematic view of a skew actual scan pattern relating to a skew standard test pattern of FIG. 2.

FIG. 3(d) is a schematic view of a distortion actual scan pattern relating to a distortion standard test pattern of FIG. 2.

FIG. 3(e) is a schematic view of a partial magnification actual scan pattern relating to a partial magnification standard test pattern of FIG. 2.

FIG. 3(f) is a schematic view of a line actual scan pattern relating to a line standard test pattern of FIG. 2.

FIG. 3(g) is a schematic view of a resolution actual scan pattern relating to a resolution standard test pattern of FIG. 2.

FIG. 3(h) is a schematic view of a color shift actual scan pattern relating to a color shift standard test pattern of FIG. 2.

FIG. 3(i) is a schematic view of a uniformity actual scan pattern relating to a uniformity standard test pattern of FIG. 2.

FIG. 3(j) is a schematic view of a feeding smooth actual scan pattern relating to a feeding smooth standard test pattern of FIG. 2.

FIG. 4 is a schematic view relating to the distortion standard test pattern of FIG. 2.

FIG. 5 is a schematic view relating to the partial magnification standard test pattern of FIG. 2.

FIG. 6A is a schematic view relating to the color shift standard test pattern of FIG. 2.

FIG. 6B is a schematic view of color shift calculation relating to the color shift standard test pattern of FIG. 2.

FIG. 7 is a schematic view relating to the uniformity standard test pattern of FIG. 2.

FIG. 8 is a schematic view relating to the feeding smooth standard test pattern of FIG. 2.

FIG. 9 is a flow chart of a product performance test method for a scanner with an ADF according to an exemplary embodiment of the present invention.

DESCRIPTION OF THE EMBODIMENTS

Reference will now be made in detail to the present embodiments of the invention, examples of which are illustrated in the accompanying drawings. Wherever possible, the same reference numbers are used in the drawings and the description to refer to the same or like parts.

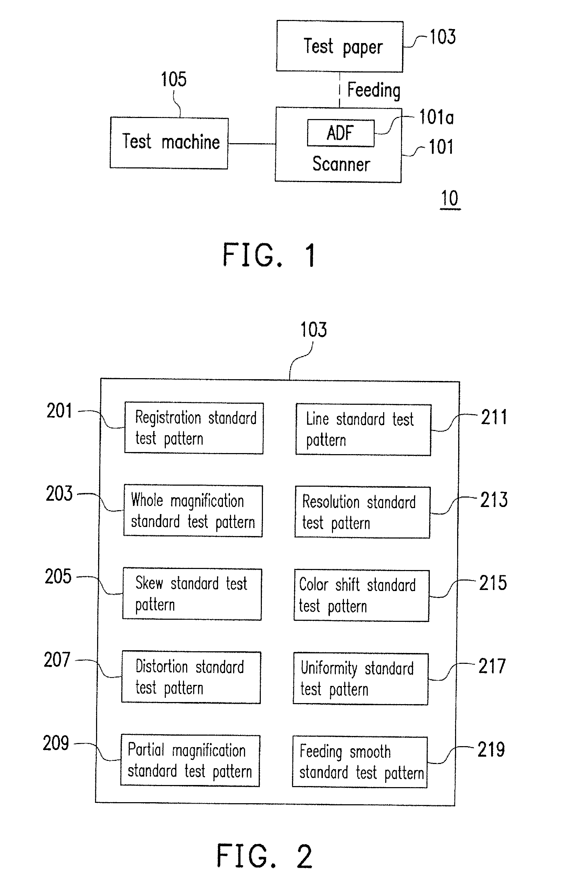

FIG. 1 is a schematic view of a product performance test system 10 according to an exemplary embodiment of the present invention. Referring to FIG. 1, the product performance test system 10 includes a scanner 101 with an ADF 101a, a test paper 103, and a test machine 105. In this exemplary embodiment, as shown in FIG. 2, a plurality of standard test patterns relating to the performance of the scanner 101 may be drawn on the test paper 103, and the size of the test paper 103 may be any paper size suitable for feeding, for example, A4, A3, B4, B5, or letter, depending on actual test requirements.

For example, the standard test patterns relating to the performance of the scanner 101 drawn on the test paper 103 may include, but not limited to, a registration standard test pattern 201, a whole magnification standard test pattern 203, a skew standard test pattern 205, a distortion standard test pattern 207, a partial magnification standard test pattern 209, a line standard test pattern 211, a resolution standard test pattern 213, a color shift standard test pattern 215, a uniformity standard test pattern 217, and a feeding smooth standard test pattern 219.

In addition, the test machine 105 may be a computer device having an operation function and a function of acquiring and analyzing a scan image, or other similar computing devices. The test machine 105 is coupled to the scanner 101, and has all of the standard test patterns 201 to 219 drawn on the test paper 103 built therein, that is, records information about the entire test paper 103. In this exemplary embodiment, the test machine 105 is used for controlling the scanner 101 to feed the test paper 103 for scanning, and analyzing the performance of the scanner 101 according to a scan result generated after the scanner 101 scans the test paper 103 and all of the built-in standard test patterns 201 to 219, so as to provide a plurality of test results relating to the performance of the scanner 101.

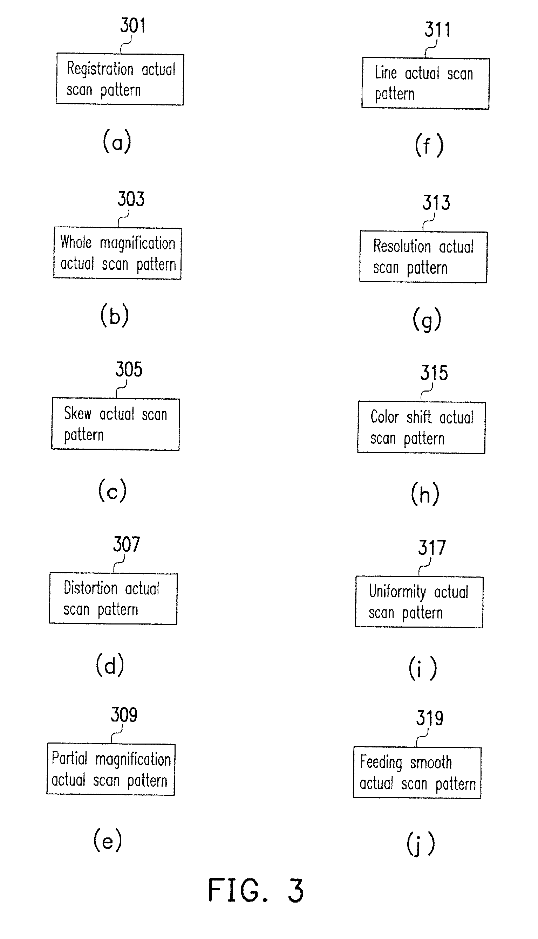

Specifically, based on the registration standard test pattern 201 drawn on the test paper 103, the scan result generated after the scanner 101 scans the test paper 103 may include a registration actual scan pattern 301, as shown in FIG. 3(a). Under this condition, the test machine 105 may determine, by analyzing the built-in registration standard test pattern 201 and the registration actual scan pattern 301 obtained by the scanner 101 after scanning, whether a scan registration of the ADF 101a of the scanner 101 is correct, and accordingly provide a scan registration test result relating to the ADF 101a of the scanner 101.

Here, the test machine 105 may take the built-in registration standard test pattern 201 as a reference, for example, a black rectangle at a position on the test paper 103, but the present invention is not limited thereto. Therefore, if the test machine 105 judges that the registration actual scan pattern 301 obtained by the scanner 101 after scanning is substantially the same as the built-in registration standard test pattern 201, it indicates that the scan registration of the ADF 101a of the scanner 101 is correct. On the contrary, if the test machine 105 judges that the registration actual scan pattern 301 obtained by the scanner 101 after scanning is substantially different from the built-in registration standard test pattern 201, it indicates that the scan registration of the ADF 101a of the scanner 101 is incorrect or erroneous.

As such, the test machine 105 may provide the scan registration test result relating to the ADF 101a of the scanner 101 for reference by the related designer. Generally, if the scan registration of the ADF 101a of the scanner 101 is incorrect or erroneous, it indicates that a jam sensor (not shown) in the ADF 101a has encountered a problem, and therefore, the related designer can remove the problem that the scan registration of the ADF 101a is incorrect or erroneous toward this direction.

In another aspect, based on the whole magnification standard test pattern 203 drawn on the test paper 103, the scan result generated after the scanner 101 scans the test paper 103 may further include a whole magnification actual scan pattern 303, as shown in FIG. 3(b). Under this condition, the test machine 105 may determine, by analyzing the built-in whole magnification standard test pattern 203 and the whole magnification actual scan pattern 303 obtained by the scanner 101 after scanning, whether a whole scan magnification of the scanner 101 is correct, and accordingly provide a whole scan magnification test result relating to the scanner 101.

Here, the test machine 105 may take the built-in whole magnification standard test pattern 203 as a reference, for example, a whole scan range defined on the test paper 103. Therefore, if the test machine 105 judges that the whole magnification actual scan pattern 303 obtained by the scanner 101 after scanning is substantially the same as the built-in whole magnification standard test pattern 203, it indicates that the whole scan magnification of the scanner 101 is correct. On the contrary, if the test machine 105 judges that the whole magnification actual scan pattern 303 obtained by the scanner 101 after scanning is substantially different from the built-in whole magnification standard test pattern 203, it indicates that the whole scan magnification of the scanner 101 is incorrect.

In this exemplary embodiment, the whole scan range defined on the test paper 103 may include length standard information and width standard information. Based on this, the test machine 105 may determine whether the whole scan magnification of the scanner 101 is correct, simply according to a length magnification formula ($|(Xd-Xs)/Xs|*100\%$, where Xd is length information obtained by scanning, and Xs is the length standard information) and a width magnification formula ($|(Yd-Ys)/Ys|*100\%$, where Yd is width information obtained by scanning, and Ys is the width standard information).

As such, the test machine 105 may provide the whole scan magnification test result relating to the scanner 101 for reference by the related designer. Generally, if the whole scan magnification of the scanner 101 is incorrect, it indicates that cooperation between a light source (not shown) in the scanner 101, transmission rollers (not shown) in the ADF 101a, and the paper has encountered a problem, and therefore, the related designer can remove the problem that the whole scan magnification of the scanner 101 is incorrect toward this direction.

In another aspect, based on the skew standard test pattern 205 drawn on the test paper 103, the scan result generated after the scanner 101 scans the test paper 103 may further include a skew actual scan pattern 305, as shown in FIG. 3(c). Under this condition, the test machine 105 may determine, by analyzing the built-in skew standard test pattern 205 and the skew actual scan pattern 305 obtained by the scanner 101 after scanning, whether a feed angle of the ADF 101a of the scanner 101 is correct, and accordingly provide a skew test result relating to the ADF 101a of the scanner 101.

Here, the test machine 105 may take the built-in skew standard test pattern 205 as a reference, for example, two horizontal lines and two vertical lines are respectively defined at four edges of the test paper 103. Therefore, if the test machine 105 judges that the skew actual scan pattern 305 obtained by the scanner 101 after scanning is substantially the same as the built-in skew standard test pattern 205 (that is, the slope of horizontal lines obtained by scanning is 0°, and the slope of vertical lines obtained by scanning is 90°), it indicates that the feed angle of the ADF 101a of the scanner 101 is correct. On the contrary, if the test machine 105 judges that the skew actual scan pattern 305 obtained by the scanner 101 after scanning is substantially different from the built-in skew standard test pattern 205 (that is, the slope of horizontal lines obtained by scanning is not 0°, and the slope of vertical lines obtained by scanning is not 90°), it indicates that the feed angle of the ADF 101a is incorrect.

As such, the test machine 105 may provide the skew test result relating to the ADF 101a of the scanner 101 for reference by the related designer. Generally, if the feed angle of the ADF 101a of the scanner 101 is incorrect, it indicates that a pick roller (not shown) in the ADF 101a has encountered a problem, and therefore, the related designer can remove the problem that the feed angle of the ADF 101a is incorrect toward this direction.

In another aspect, based on the distortion standard test pattern 207 drawn on the test paper 103, the scan result generated after the scanner 101 scans the test paper 103 may further include a distortion actual scan pattern 307, as shown in FIG. 3(d). Under this condition, the test machine 105 may determine, by analyzing the built-in distortion standard test pattern 207 and the distortion actual scan pattern 307 obtained by the scanner 101 after scanning, whether the test paper 103 fed by the ADF 101a of the scanner 101 is distorted, and accordingly provide a distortion test result relating to the ADF 101a of the scanner 101.

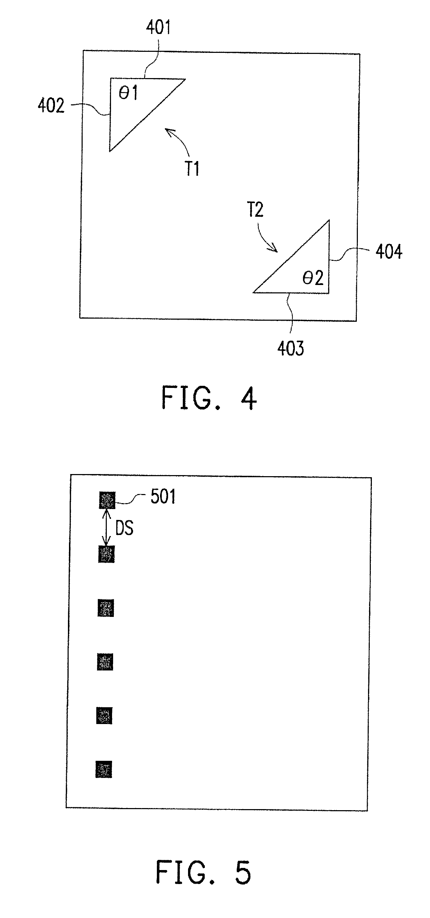

Here, the test machine 105 may take the built-in distortion standard test pattern 207 as a reference, for example, two triangles T1 and T2 as shown in FIG. 4. Therefore, in the built-in distortion standard test pattern 207, the test machine 105 may calculate an angle θ1 of the triangle T1 according to line segments 401 and 402 of the triangle T1, as follows:

$$\theta 1 = \cos^{-1}\left(\frac{<401> \bullet <402>}{\|401\|\|402\|}\right).$$

Meanwhile, the test machine 105 may also calculate an angle θ2 of the triangle T2 according to line segments 403 and 404 of the triangle T2, as follows:

$$\theta 2 = \cos^{-1}\left(\frac{<403> \bullet <404>}{\|403\|\|404\|}\right).$$

In a normal case, if the test paper 103 fed by the ADF 101a is not distorted, the angles θ1 and θ2 are both 90°.

However, if the test machine 105 calculates according to the distortion actual scan pattern 307 and judges that the angles θ1 and θ2 are not 90°, it indicates that the test paper 103 fed by the ADF 101a is distorted. Generally, if the angles θ1 and θ2 are larger than 90°, it indicates that the test paper 103 fed by the ADF 101a is already subjected to barrel distortion; on the contrary, if the angles θ1 and θ2 are smaller than 90°, it indicates that the test paper 103 fed by the ADF 101a is already subjected to pincushion distortion.

As such, the test machine 105 may provide the distortion test result relating to the ADF 101a of the scanner 101 for reference by the related designer. Generally, if the test paper 103 fed by the ADF 101a of the scanner 101 1 is distorted, it indicates that the mechanical assembly of the entire ADF 101 a has encountered a problem, and therefore, the related designer can remove the problem that the paper fed by the ADF 101a is distorted toward this direction.

In another aspect, based on the partial magnification standard test pattern 209 drawn on the test paper 103, the scan result generated after the scanner 101 scans the test paper 103 may further include a partial magnification actual scan pattern 309, as shown in FIG. 3(e). Under this condition, the test machine 105 may determine, by analyzing the built-in partial magnification standard test pattern 209 and the partial magnification actual scan pattern 309 obtained by the scanner 101 after scanning, whether a partial scan magnification of the scanner 101 is correct, and accordingly provide a partial scan magnification test result relating to the scanner 101.

Here, the test machine 105 may take the built-in partial magnification standard test pattern 209 as a reference, for example, a plurality of black rectangles 501 having the same axis and spaced by the same distance Ds as shown in FIG. 5. Therefore, the test machine 105 may determine whether the partial scan magnification of the scanner 101 is correct, simply according to a partial magnification formula ($|(Dn-Ds)/Ds|*100\%$, where Dn is a distance between any two black rectangles 501 having the same axis in the partial magnification actual scan pattern 309).

Basically, if the test machine 105 judges that the partial magnification actual scan pattern 309 obtained by the scanner 101 after scanning is substantially the same as the built-in partial magnification standard test pattern 209 (that is, $Dn \doteq Ds$), it indicates that the partial scan magnification of the scanner 101 is correct or acceptable. On the contrary, if the test machine 105 judges that the partial magnification actual scan pattern 309 obtained by the scanner 101 after scanning is substantially different from the built-in partial magnification standard test pattern 209 (that is, $Dn \neq Ds$), it indicates that the partial scan magnification of the scanner 101 is incorrect or unacceptable.

As such, the test machine 105 may provide the partial scan magnification test result relating to the scanner 101 for reference by the related designer. Generally, if the partial scan magnification of the scanner 101 is incorrect or unacceptable, it indicates that a main feed roller in the ADF 101a is not round (that is, elliptical), and therefore, the related designer can remove the problem that the partial scan magnification of the scanner 101 is incorrect toward this direction.

In another aspect, based on the line standard test pattern 211 drawn on the test paper 103, the scan result generated after the scanner 101 scans the test paper 103 may further include a line actual scan pattern 311, as shown in FIG. 3(f). Under this condition, the test machine 105 may determine, by analyzing the built-in line standard test pattern 211 and the line actual scan pattern 311 obtained by the scanner 101 after scanning, whether the test paper 103 fed by the ADF 101a of the scanner 101 shakes, and accordingly provide a shake test result relating to the ADF 101a of the scanner 101.

Here, the test machine 105 may take the built-in line standard test pattern 211 as a reference, for example, a horizontal line and a vertical line. Therefore, if the test machine 105 judges that the line actual scan pattern 311 obtained by the scanner 101 after scanning is substantially the same as the built-in line standard test pattern 211 (that is, a horizontal line obtained by scanning is still horizontal, and a vertical line obtained by scanning is still vertical), it indicates that the test paper 103 fed by the ADF 101a does not shake. On the contrary, if the test machine 105 judges that the line actual scan pattern 311 obtained by the scanner 101 after scanning is substantially different from the built-in line standard test pattern 211 (that is, a horizontal line obtained by scanning is not horizontal, and a vertical line obtained by scanning is not vertical), it indicates that the test paper 103 fed by the ADF 101a has already shaken.

As such, the test machine 105 may provide the shake test result relating to the ADF 101a of the scanner 101 for reference by the related designer. Generally, if the paper fed by the ADF 101a shakes, it indicates that some transmission rollers in the ADF 101a have encountered a problem, and therefore, the related designer can remove the problem that the paper fed by the ADF 101a shakes toward this direction.

In another aspect, based on the resolution standard test pattern 213 drawn on the test paper 103, the scan result generated after the scanner 101 scans the test paper 103 may further include a resolution actual scan pattern 313, as shown in FIG. 3(g). Under this condition, the test machine 105 may determine, by analyzing the built-in resolution standard test pattern 213 and the resolution actual scan pattern 313 obtained by the scanner 101 after scanning, whether a scan resolution of the scanner 101 complies with standards, and accordingly provide a scan resolution test result relating to the scanner 101.

Here, the test machine 105 may take the built-in resolution standard test pattern 213 as a reference, for example, each inch has 71 pairs of line segments (corresponding to scan requirements of the scanner 101 for 300dpi), each inch has 142 pairs of line segments (corresponding to scan requirements of the scanner 101 for 600dpi), or each inch has 284 pairs of line segments (corresponding to scan requirements of the scanner 101 for 1200dpi), but the present invention is not limited thereto. Therefore, the test machine 105 may analyze whether the scan resolution of the scanner 101 complies with standards by adopting a modulation transfer function (MTF) test mode, but the present invention is not limited thereto, and any other approach/mode capable of analyzing the scan resolution of the scanner 101 is also applicable, depending on actual test requirements. Based on this, the test machine 105 may determine whether the scan resolution of the scanner 101 is correct, simply according to an MTF formula ($MTF = [(M_H-M_L)/(M_H+M_L)]*100\%$, where $M_H$ is a maximum gray scale value distribution in a histogram distribution, and $M_L$ is a minimum gray scale value distribution in the histogram distribution).

Basically, if the test machine 105 judges that the resolution actual scan pattern 313 obtained by the scanner 101 after scanning is substantially the same as the built-in resolution standard test pattern 213 (that is, a gray scale distribution obtained by scanning is the same as the gray scale distribution of the resolution standard test pattern 213), it indicates that the scan resolution of the scanner 101 is correct or complies with standards. On the contrary, if the test machine 105 judges that the resolution actual scan pattern 313 obtained by the scanner 101 after scanning is substantially different from the built-in resolution standard test pattern 213 (that is, a gray scale distribution obtained by scanning is different from the gray scale distribution of the resolution standard test pattern 213), it indicates that the scan resolution of the scanner 101 is incorrect or does not comply with standards.

As such, the test machine 105 may provide the scan resolution test result relating to the scanner 101 for reference by the related designer. Generally, if the scan resolution of the scanner 101 is incorrect, it indicates that a focal length between the light source of the scanner 101 and the paper has encountered a problem, and therefore, the related designer can remove the problem that the scan resolution of the scanner 101 is incorrect toward this direction.

In another aspect, based on the color shift standard test pattern 215 drawn on the test paper 103, the scan result generated after the scanner 101 scans the test paper 103 may further include a color shift actual scan pattern 315, as shown in FIG. 3(h). Under this condition, the test machine 105 may determine, by analyzing the built-in color shift standard test pattern 215 and the color shift actual scan pattern 315 obtained by the scanner 101 after scanning, whether a scan color of the scanner 101 is shifted, and accordingly provide a scan color test result relating to the scanner 101.

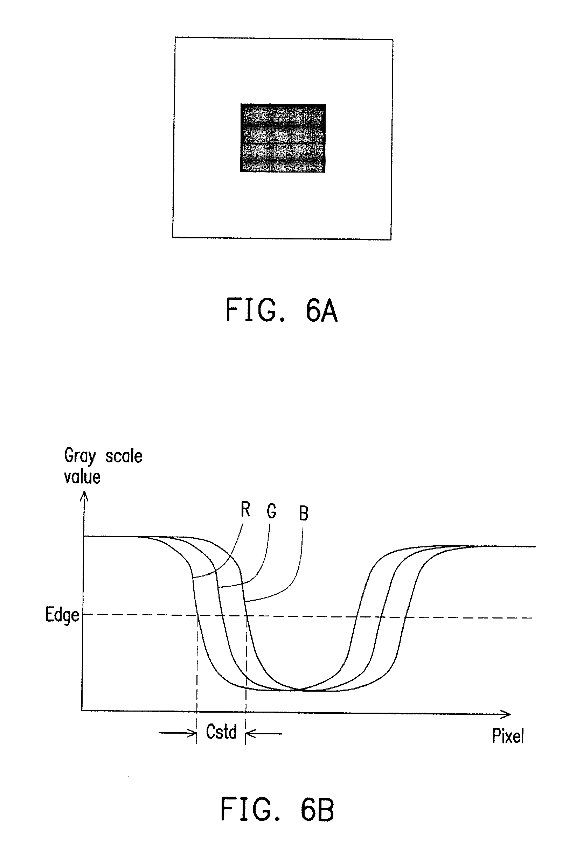

Here, the test machine 105 may take the built-in color shift standard test pattern 215 as a reference, for example, an outer frame and a (black) inner rectangle that are coaxial as shown in FIG. 6A. Therefore, if the test machine 105 judges that the color shift actual scan pattern 315 obtained by the scanner 101 after scanning is substantially the same as the built-in color shift standard test pattern 215, it indicates that the scan color of the scanner 101 is not shifted. On the contrary, if the test machine 105 judges that the color shift actual scan pattern 315 obtained by the scanner 101 after scanning is substantially different from the built-in color shift standard test pattern 215, it indicates that the scan color of the scanner 101 is already shifted.

For example, the test machine 105 may: 1, calculate color gamut variations of red, green and blue (RGB) light turning from black to white at edges of the outer frame of the built-in color shift standard test pattern 215 (as shown in FIG. 6B), and obtain absolute values of differences between shifts of red, green and blue (RGB) light (that is, |R-G|, |G-B| and |R-B|), so as to obtain a maximum standard color shift (Cstd); 2, calculate color gamut variations of red, green and blue light turning from black to white at edges of an outer frame obtained by scanning, and obtain differences between shifts of red, green and blue light, so as to obtain a maximum actual color shift (Cact); 3, compare the obtained maximum standard color shift (Cstd) with the maximum actual color shift (Cact); 4, if it is determined by comparison that the obtained maximum standard color shift (Cstd) is substantially the same as the maximum actual color shift (Cact), it indicates that the scan color of the scanner 101 is not shifted; and 5, if it is determined by comparison that the obtained maximum standard color shift (Cstd) is substantially different from the maximum actual color shift (Cact), it indicates that the scan color of the scanner 101 is already shifted.

As such, the test machine 105 may provide the scan color test result relating to the scanner 101 for reference by the related designer. Generally, if the scan color of the scanner 101 is shifted, it indicates that the light source of the scanner 101 has encountered a problem (for example, but not limited to, a problem in the time sequence of switching of red, green and blue light), and therefore, the related designer can remove the problem that the scan color of the scanner 101 is shifted toward this direction.

In another aspect, based on the uniformity standard test pattern 217 drawn on the test paper 103, the scan result generated after the scanner 101 scans the test paper 103 may further include a uniformity actual scan pattern 317, as shown in FIG. 3(i). Under this condition, the test machine 105 may determine, by analyzing the built-in uniformity standard test pattern 217 and the uniformity actual scan pattern 317 obtained by the scanner 101 after scanning, whether a scan uniformity of the scanner 101 is poor, and accordingly provide a scan uniformity test result relating to the scanner 101.

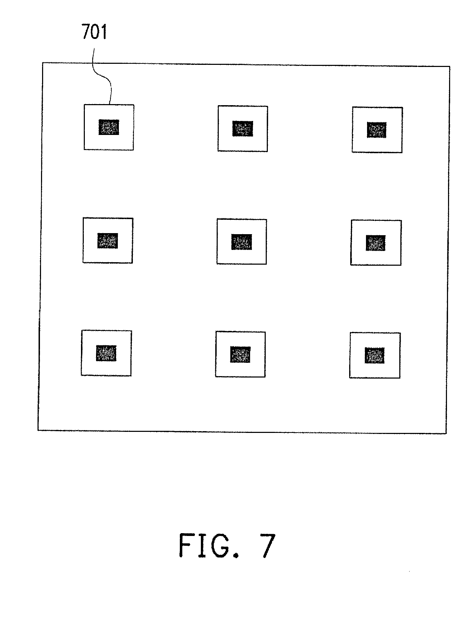

Here, the test machine 105 may take the built-in uniformity standard test pattern 217 as a reference, for example, a plurality of outer frames and inner rectangles 701 that are uniformly distributed and coaxial as shown in FIG. 7, where the inner rectangles are black, and white areas exist between the outer frames and the inner rectangles. Therefore, if the test machine 105 judges that the uniformity actual scan pattern 317 obtained by the scanner 101 after scanning is substantially the same as the built-in uniformity standard test pattern 217 (that is, an inner rectangle obtained by each scan is still black, and an area between an outer frame and an inner rectangle obtained by each scan is still white), it indicates that the scan uniformity of the scanner 101 is good. On the contrary, if the test machine 105 judges that the uniformity actual scan pattern 317 obtained by the scanner 101 after scanning is substantially different from the built-in uniformity standard test pattern 217 (that is, inner rectangles obtained by some scans are not black, and areas between outer frames and inner rectangles obtained by some scans are not white), it indicates that the scan uniformity of the scanner 101 is poor.

As such, the test machine 105 may provide the scan uniformity test result relating to the scanner 101 for reference by the related designer. Generally, if the scan uniformity of the scanner 101 is poor, it indicates that cooperation between the light source of the scanner 101 and transmission rollers of the ADF 101a has encountered a problem, and therefore, the related designer can remove the problem that the scan uniformity of the scanner 101 is poor toward this direction.

In another aspect, based on the feeding smooth standard test pattern 219 drawn on the test paper 103, the scan result generated after the scanner 101 scans the test paper 103 may further include a feeding smooth actual scan pattern 319, as shown in FIG. 3(j). Under this condition, the test machine 105 may determine, by analyzing the built-in feeding smooth standard test pattern 219 and the feeding smooth actual scan pattern 319 obtained by the scanner 101 after scanning, whether the test paper 103 fed by the ADF 101a of the scanner 101 is dragged or flattened, and accordingly provide a feeding smooth test result relating to the ADF 101a of the scanner 101.

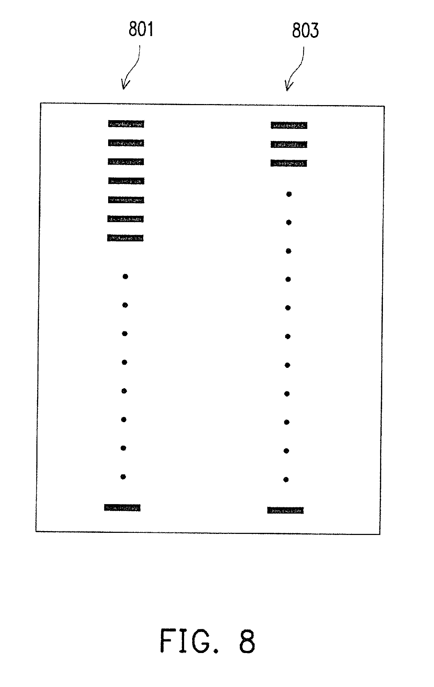

Here, the test machine 105 may take the built-in feeding smooth standard test pattern 219 as a reference, for example, two black and white stripes 801 and 803 that have the same line spacing and are dense as shown in FIG. 8. Therefore, the test machine 105 may determine whether the test paper 103 fed by the ADF 101a is dragged or flattened, simply according to a line spacing calculation formula ([(Lmax-Lmin)/Lavg]*100%, where Lmax is a maximum line spacing, Lmin is a minimum line spacing, and Lavg is an average line spacing.

Basically, if the test machine 105 judges that the feeding smooth actual scan pattern 319 obtained by the scanner 101 after scanning is substantially the same as the built-in feeding smooth standard test pattern 219 (that is, a maximum line spacing (Lmax) obtained by scanning is substantially equal to a minimum line spacing (Lmin) obtained by scanning), it indicates that the test paper 103 fed by the ADF 101a is not dragged or flattened. On the contrary, if the test machine 105 judges that the feeding smooth actual scan pattern 319 obtained by the scanner 101 after scanning is substantially different from the built-in feeding smooth standard test pattern 219 (that is, a maximum line spacing (Lmax) obtained by scanning is substantially unequal to a minimum line spacing (Lmin) obtained by scanning), it indicates that the test paper 103 fed by the ADF 101a is already dragged or flattened, and the test machine 105 may further determine an area where the maximum line spacing (Lmax) is generated according to the feeding smooth actual scan pattern 319 (that is, the maximum line spacing Lmax obtained by scanning).

As such, the test machine 105 may provide the feeding smooth test result relating to the ADF 101a of the scanner 101 for reference by the related designer. Generally, if the paper fed by the ADF 101a is dragged or flattened, it indicates that some transmission rollers in the ADF 101a have encountered a problem leading to a delay or acceleration of feeding, and therefore, the related designer can remove the problem that the paper fed by the ADF 101a is dragged or flattened toward this direction.

It can be seen from the above that, the test machine 105 can fast test the performance of the scanner 101 with the ADF 101a by simply controlling the scanner 101 with the ADF 101a to feed the test paper 103 for scanning (for example, a scan registration test of the ADF of the scanner, a whole scan magnification test of the scanner, a skew test of the ADF of the scanner, a distortion test of the ADF of the scanner, a partial scan magnification test of the scanner, a shake test of the ADF of the scanner, a scan resolution test of the scanner, a scan color test of the scanner, a scan uniformity test of the scanner, and a feeding smooth test of the ADF of the scanner), so as to let the tester/related designer know whether the scanner is good or bad.

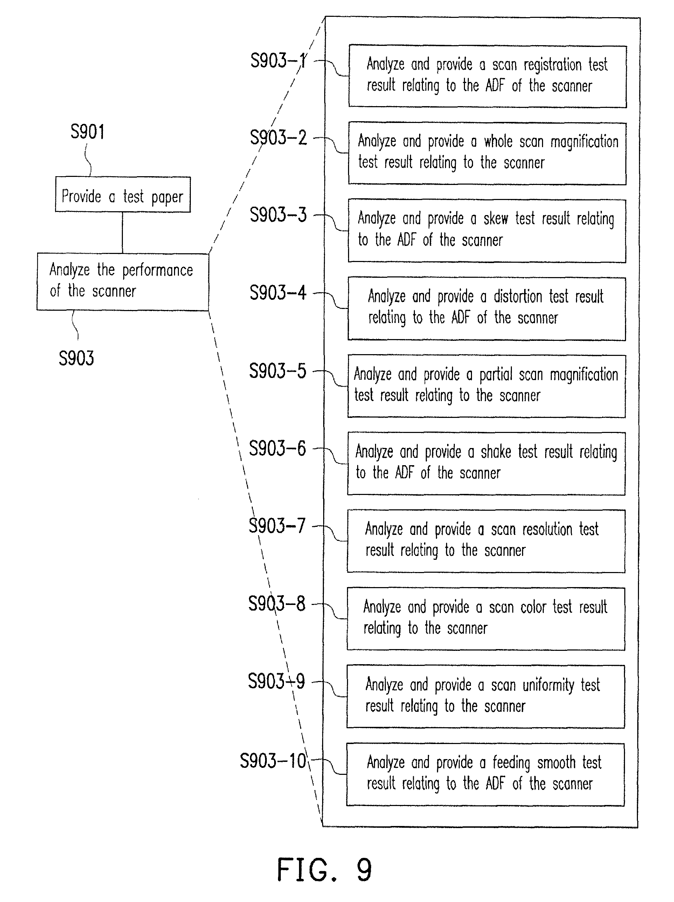

Based on the disclosure/teaching of the above exemplary embodiment, FIG. 9 is a flow chart of a product performance test method for a scanner with an ADF according to an exemplary embodiment of the present invention. Referring to FIG. 9, the product performance test method of this exemplary embodiment includes: providing a test paper, where a plurality of standard test patterns relating to the performance of the scanner is drawn on the test paper (Step S901); and controlling the scanner to feed the provided test paper for scanning, and analyzing the performance of the scanner according to a scan result generated after the scanner scans the test paper and all of the standard test patterns, so as to provide a plurality of test results relating to the performance of the scanner (Step S903).

In this exemplary embodiment, all of the standard test patterns drawn on the test paper provided in Step S901 may include, but not limited to, a registration standard test pattern, a whole magnification standard test pattern, a skew standard test pattern, a distortion standard test pattern, a partial magnification standard test pattern, a line standard test pattern, a resolution standard test pattern, a color shift standard test pattern, a uniformity standard test pattern, and a feeding smooth standard test pattern.

Based on the registration standard test pattern drawn on the test paper, the scan result generated after the scanner scans the test paper may include a registration actual scan pattern. Under this condition, the step of analyzing the performance of the scanner in Step S903 may include: determining by analyzing the registration standard test pattern and the registration actual scan pattern whether a scan registration of the ADF of the scanner is correct, and accordingly providing a scan registration test result relating to the ADF of the scanner (Step S903-1).

Based on the whole magnification standard test pattern drawn on the test paper, the scan result generated after the scanner scans the test paper may further include a whole magnification actual scan pattern. Under this condition, the step of analyzing the performance of the scanner in Step S903 may further include: determining by analyzing the whole magnification standard test pattern and the whole magnification actual scan pattern whether a whole scan magnification of the scanner is correct, and accordingly providing a whole scan magnification test result relating to the scanner (Step S903-2).

Based on the skew standard test pattern drawn on the test paper, the scan result generated after the scanner scans the test paper may further include a skew actual scan pattern. Under this condition, the step of analyzing the performance of the scanner in Step S903 may further include: determining by analyzing the skew standard test pattern and the skew actual scan pattern whether a feed angle of the ADF of the scanner is correct, and accordingly providing a skew test result relating to the ADF of the scanner (Step S903-3).

Based on the distortion standard test pattern drawn on the test paper, the scan result generated after the scanner scans the test paper may further include a distortion actual scan pattern. Under this condition, the step of analyzing the performance of the scanner in Step S903 may further include: determining by analyzing the distortion standard test pattern and the distortion actual scan pattern whether the test paper fed by the ADF of the scanner is distorted, and accordingly providing a distortion test result relating to the ADF of the scanner (Step S903-4).

Based on the partial magnification standard test pattern drawn on the test paper, the scan result generated after the scanner scans the test paper may further include a partial magnification actual scan pattern. Under this condition, the step of analyzing the performance of the scanner in Step S903 may further include: determining by analyzing the partial magnification standard test pattern and the partial magnification actual scan pattern whether a partial scan magnification of the scanner is correct, and accordingly providing a partial scan magnification test result relating to the scanner (Step S903-5).

Based on the line standard test pattern drawn on the test paper, the scan result generated after the scanner scans the test paper may further include a line actual scan pattern. Under this condition, the step of analyzing the performance of the scanner in Step S903 may further include: determining by analyzing the line standard test pattern and the line actual scan pattern whether the test paper fed by the ADF of the scanner shakes, and accordingly providing a shake test result relating to the ADF of the scanner (Step S903-6).

Based on the resolution standard test pattern drawn on the test paper, the scan result generated after the scanner scans the test paper may further include a resolution actual scan pattern. Under this condition, the step of analyzing the performance of the scanner in Step S903 may further include: determining by analyzing the resolution standard test pattern and the resolution actual scan pattern whether a scan resolution of the scanner complies with standards, and accordingly providing a scan resolution test result relating to the scanner (Step S903-7).

Based on the color shift standard test pattern drawn on the test paper, the scan result generated after the scanner scans the test paper may further include a color shift actual scan pattern. Under this condition, the step of analyzing the performance of the scanner in Step S903 may further include: determining by analyzing the color shift standard test pattern and the color shift actual scan pattern whether a scan color of the scanner is shifted, and accordingly providing a scan color test result relating to the scanner (Step S903-8).

Based on the uniformity standard test pattern drawn on the test paper, the scan result generated after the scanner scans the test paper may further include a uniformity actual scan pattern. Under this condition, the step of analyzing the performance of the scanner in Step S903 may further include: determining by analyzing the uniformity standard test pattern and the uniformity actual scan pattern whether a scan uniformity of the scanner is poor, and accordingly providing a scan uniformity test result relating to the scanner (Step S903-9).

Based on the feeding smooth standard test pattern drawn on the test paper, the scan result generated after the scanner scans the test paper may further include a feeding smooth actual scan pattern. Under this condition, the step of analyzing the performance of the scanner in Step S903 may further include: determining by analyzing the feeding smooth standard test pattern and the feeding smooth actual scan pattern whether the test paper fed by the ADF of the scanner is dragged or flattened, and accordingly providing a feeding smooth test result relating to the ADF of the scanner (Step S903-10).

Based on the above, the present invention mainly aims to design special test patterns and test algorithms for the scanner with the ADF, for example, a scan registration test of the ADF of the scanner, a whole scan magnification test of the scanner, a skew test of the ADF of the scanner, a distortion test of the ADF of the scanner, a partial scan magnification test of the scanner, a shake test of the ADF of the scanner, a scan resolution test of the scanner, a scan color test of the scanner, a scan uniformity test of the scanner, and a feeding smooth test of the ADF of the scanner. Accordingly, the present invention can fast test the performance of the scanner with the ADF to let the tester know whether the scanner is good or bad.

From different views, all technical means of feeding a test paper to analyze and test the performance of a scanner with an ADF shall fall within the scope of the present invention. Therefore, the scope of the present invention is not limited to the content disclosed/recorded by the above exemplary embodiments, and the performance of the scanner to be analyzed may be determined depending on actual test requirements.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

**Claims**

1. A product performance test system (10), comprising:

    a scanner (101) with an automatic document feeder (ADF, 101a);
    a test paper (103), wherein a plurality of standard test patterns (201-219) relating to the performance of the scanner (101) is drawn on the test paper (103); and
    a test machine (105), coupled to the scanner (101), having the standard test patterns (201-219) built therein, and for controlling the scanner (101) to feed the test paper (103) for scanning, and analyzing the performance of the scanner (101) according to a scan result generated after the scanner (101) scans the test paper (103) and the built-in standard test patterns (201-219), so as to provide a plurality of test results relating to the performance of the scanner (101).

2. The product performance test system (10) according to claim 1, wherein
the standard test patterns (201-219) comprise a registration standard test pattern (201);
the scan result comprises a registration actual scan pattern (301); and

the test machine (105) determines by analyzing the registration standard test pattern (201) and the registration actual scan pattern (301) whether a scan registration of the ADF (101a) of the scanner (101) is correct, and accordingly provides a scan registration test result relating to the ADF (101a) of the scanner (101).

3. The product performance test system (10) according to claim 2, wherein
the standard test patterns (201-219) further comprise a whole magnification standard test pattern (203);
the scan result further comprises a whole magnification actual scan pattern (303); and
the test machine (105) determines by analyzing the whole magnification standard test pattern (203) and the whole magnification actual scan pattern (303) whether a whole scan magnification of the scanner (101) is correct, and accordingly provides a whole scan magnification test result relating to the scanner (101).

4. The product performance test system (10) according to claim 3, wherein
the standard test patterns (201-219) further comprise a skew standard test pattern (205);
the scan result further comprises a skew actual scan pattern (305); and
the test machine (105) determines by analyzing the skew standard test pattern (205) and the skew actual scan pattern (305) whether a feed angle of the ADF (101a) of the scanner (101) is correct, and accordingly provides a skew test result relating to the ADF (101a) of the scanner (101).

5. The product performance test system (10) according to claim 4, wherein
the standard test patterns (201-219) further comprise a distortion standard test pattern (207);
the scan result further comprises a distortion actual scan pattern (307); and the test machine (105) determines by analyzing the distortion standard test pattern (207) and the distortion actual scan pattern (307) whether the test paper (103) fed by the ADF (101a) of the scanner (101) is distorted, and accordingly provides a distortion test result relating to the ADF (101a) of the scanner (101).

6. The product performance test system (10) according to claim 5, wherein
the standard test patterns (201-219) further comprise a partial magnification standard test pattern (209);
the scan result further comprises a partial magnification actual scan pattern (309); and
the test machine (105) determines by analyzing the partial magnification standard test pattern (209) and the partial magnification actual scan pattern (309) whether a partial scan magnification of the scanner (101) is correct, and accordingly provides a partial scan magnification test result relating to the scanner (101).

7. The product performance test system (10) according to claim 6, wherein
the standard test patterns (201-219) further comprise a line standard test pattern (211);
the scan result further comprises a line actual scan pattern (311); and
the test machine (105) determines by analyzing the line standard test pattern (211) and the line actual scan pattern (311) whether the test paper (103) fed by the ADF (101a) of the scanner (101) shakes, and accordingly provides a shake test result relating to the ADF (101a) of the scanner (101).

8. The product performance test system (10) according to claim 7, wherein
the standard test patterns (201-219) further comprise a resolution standard test pattern (213);
the scan result further comprises a resolution actual scan pattern (313); and the test machine (105) determines by analyzing the resolution standard test pattern (213) and the resolution actual scan pattern (313) whether a scan resolution of the scanner (101) complies with standards, and accordingly provides a scan resolution test result relating to the scanner (101).

9. The product performance test system (10) according to claim 8, wherein
the standard test patterns (201-219) further comprise a color shift standard test pattern (215);
the scan result further comprises a color shift actual scan pattern (315); and
the test machine (105) determines by analyzing the color shift standard test pattern (215) and the color shift actual scan pattern (315) whether a scan color of the scanner (101) is shifted, and accordingly provides a scan color test result relating to the scanner (101).

10. The product performance test system (10) according to claim 9, wherein
the standard test patterns (201-219) further comprise a uniformity standard test pattern (217);
the scan result further comprises a uniformity actual scan pattern (317); and
the test machine (105) determines by analyzing the uniformity standard test pattern (217) and the uniformity actual scan pattern (317) whether a scan uniformity of the scanner (101) is poor, and accordingly provides a scan uniformity test result relating to the scanner (101).

11. The product performance test system (10) according to claim 10, wherein
the standard test patterns (201-219) further comprise a feeding smooth standard test pattern (219);
the scan result further comprises a feeding smooth actual scan pattern (319); and
the test machine (105) determines by analyzing the feeding smooth standard test pattern (219) and the feeding smooth actual scan pattern (319) whether the test paper (103) fed by the ADF (101a) of the scanner (101) is dragged or flattened, and accordingly provides a feeding smooth test result relating to the ADF (101a) of the scanner (101).

12. A product performance test method, for a scanner with an automatic document feeder (ADF), the product performance test method comprising:

providing (S901) a test paper, wherein a plurality of standard test patterns relating to the performance of the scanner is drawn on the test paper; and
controlling the scanner to feed the test paper for scanning, and analyzing (S903) the performance of the scanner according to a scan result generated after the scanner scans the test paper and the standard test patterns, so as to provide a plurality of test results relating to the performance of the scanner.

13. The product performance test method according to claim 12, wherein
the standard test patterns comprise a registration standard test pattern;
the scan result comprises a registration actual scan pattern; and
the step of analyzing the performance of the scanner comprises: determining by analyzing the registration standard test pattern and the registration actual scan pattern whether a scan registration of the ADF of the scanner is correct, and accordingly providing (S903-1) a scan registration test result relating to the ADF of the scanner.

14. The product performance test method according to claim 13, wherein
the standard test patterns further comprise a whole magnification standard test pattern;
the scan result further comprises a whole magnification actual scan pattern; and
the step of analyzing the performance of the scanner further comprises: determining by analyzing the whole magnification standard test pattern and the whole magnification actual scan pattern whether a whole scan magnification of the scanner is correct, and accordingly providing (S903-2) a whole scan magnification test result relating to the scanner.

**15.** The product performance test method according to claim 14, wherein
the standard test patterns further comprise a skew standard test pattern;
the scan result further comprises a skew actual scan pattern; and
the step of analyzing the performance of the scanner further comprises: determining by analyzing the skew standard test pattern and the skew actual scan pattern whether a feed angle of the ADF of the scanner is correct, and accordingly providing (S903-3) a skew test result relating to the ADF of the scanner.

**16.** The product performance test method according to claim 15, wherein
the standard test patterns further comprise a distortion standard test pattern;
the scan result further comprises a distortion actual scan pattern; and
the step of analyzing the performance of the scanner further comprises: determining by analyzing the distortion standard test pattern and the distortion actual scan pattern whether the test paper fed by the ADF of the scanner is distorted, and accordingly providing (S903-4) a distortion test result relating to the ADF of the scanner.

**17.** The product performance test method according to claim 16, wherein
the standard test patterns further comprise a partial magnification standard test pattern;
the scan result further comprises a partial magnification actual scan pattern; and
the step of analyzing the performance of the scanner further comprises: determining by analyzing the partial magnification standard test pattern and the partial magnification actual scan pattern whether a partial scan magnification of the scanner is correct, and accordingly providing (S903-5) a partial scan magnification test result relating to the scanner.

**18.** The product performance test method according to claim 17, wherein
the standard test patterns further comprise a line standard test pattern;
the scan result further comprises a line actual scan pattern; and
the step of analyzing the performance of the scanner further comprises: determining by analyzing the line standard test pattern and the line actual scan pattern whether the test paper fed by the ADF of the scanner shakes, and accordingly providing (S903-6) a shake test result relating to the ADF of the scanner.

**19.** The product performance test method according to claim 18, wherein
the standard test patterns further comprise a resolution standard test pattern;
the scan result further comprises a resolution actual scan pattern; and
the step of analyzing the performance of the scanner further comprises: determining by analyzing the resolution standard test pattern and the resolution actual scan pattern whether a scan resolution of the scanner complies with standards, and accordingly providing (S903-7) a scan resolution test result relating to the scanner.

**20.** The product performance test method according to claim 19, wherein
the standard test patterns further comprise a color shift standard test pattern;
the scan result further comprises a color shift actual scan pattern; and
the step of analyzing the performance of the scanner further comprises: determining by analyzing the color shift standard test pattern and the color shift actual scan pattern whether a scan color of the scanner is shifted, and accordingly providing (S903-8) a scan color test result relating to the scanner.

**21.** The product performance test method according to claim 20, wherein
the standard test patterns further comprise a uniformity standard test pattern;
the scan result further comprises a uniformity actual scan pattern; and
the step of analyzing the performance of the scanner further comprises: determining by analyzing the uniformity standard test pattern and the uniformity actual scan pattern whether a scan uniformity of the scanner is poor, and accordingly providing (S903-9) a scan uniformity test result relating to the scanner.

**22.** The product performance test method according to claim 21, wherein
the standard test patterns further comprise a feeding smooth standard test pattern;
the scan result further comprises a feeding smooth actual scan pattern; and
the step of analyzing the performance of the scanner further comprises: determining by analyzing the feeding smooth standard test pattern and the feeding smooth actual scan pattern whether the test paper fed by the ADF of the scanner is dragged or flattened, and accordingly providing (S903-10) a feeding smooth test result relating to the ADF of the scanner.

Test paper — 103

Feeding

105

Test machine

ADF — 101a
Scanner — 101

10

# FIG. 1

103

201 — Registration standard test pattern

Line standard test pattern — 211

203 — Whole magnification standard test pattern

Resolution standard test pattern — 213

205 — Skew standard test pattern

Color shift standard test pattern — 215

207 — Distortion standard test pattern

Uniformity standard test pattern — 217

209 — Partial magnification standard test pattern

Feeding smooth standard test pattern — 219

# FIG. 2

301

Registration actual
scan pattern

(a)

303

Whole magnification
actual scan pattern

(b)

305

Skew actual scan
pattern

(c)

307

Distortion actual
scan pattern

(d)

309

Partial magnification
actual scan pattern

(e)

311

Line actual scan
pattern

(f)

313

Resolution actual
scan pattern

(g)

315

Color shift actual
scan pattern

(h)

317

Uniformity actual
scan pattern

(i)

319

Feeding smooth
actual scan pattern

(j)

FIG. 3

FIG. 4

FIG. 5

FIG. 6A

FIG. 6B

701

FIG. 7

801    803

FIG. 8

S901

Provide a test paper

Analyze the performance
of the scanner

S903

S903-1 — Analyze and provide a scan registration test result relating to the ADF of the scanner

S903-2 — Analyze and provide a whole scan magnification test result relating to the scanner

S903-3 — Analyze and provide a skew test result relating to the ADF of the scanner

S903-4 — Analyze and provide a distortion test result relating to the ADF of the scanner

S903-5 — Analyze and provide a partial scan magnification test result relating to the scanner

S903-6 — Analyze and provide a shake test result relating to the ADF of the scanner

S903-7 — Analyze and provide a scan resolution test result relating to the scanner

S903-8 — Analyze and provide a scan color test result relating to the scanner

S903-9 — Analyze and provide a scan uniformity test result relating to the scanner

S903-10 — Analyze and provide a feeding smooth test result relating to the ADF of the scanner

FIG. 9

EUROPEAN SEARCH REPORT

Application Number

EP 12 15 0145

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 510 896 A (WAFLER WALTER F [US]) 23 April 1996 (1996-04-23) | 1-7,9-11 | INV. H04N1/00 |
| Y | * abstract * <br> * column 4, lines 8-38 * <br> * column 6, line 19 - column 7, line 7 * <br> * column 8, lines 1-28 * | 8 | |
| Y | US 2005/275724 A1 (ALBERTELLI LAWRENCE E [US]) 15 December 2005 (2005-12-15) <br> * abstract * | 8 | |
| X | US 2010/157380 A1 (MIYAGAWA SEIJI [JP]) 24 June 2010 (2010-06-24) <br> * abstract * <br> * paragraphs [0046], [0050], [0053], [0059], [0098] - [0100] * | 1,3,6,11 | |
| X | US 2004/263919 A1 (AOYAMA NOBORU [JP]) 30 December 2004 (2004-12-30) <br> * abstract * <br> * paragraphs [0019] - [0026] * | 1,9,10 | |
| | | | TECHNICAL FIELDS SEARCHED (IPC) |
| X | EP 1 104 161 A2 (XEROX CORP [US]) 30 May 2001 (2001-05-30) <br> * abstract * <br> * paragraphs [0002], [0003], [0014], [0016] * | 1,2 | H04N |
| A | US 2003/053154 A1 (KAMISUWA YOSHIKATSU [JP]) 20 March 2003 (2003-03-20) <br> * abstract * <br> * paragraphs [0048] - [0056] * | 1-7,11 | |

-/--

The present search report has been drawn up for all claims

| Place of search | Date of completion of the search | Examiner |
|---|---|---|
| Berlin | 20 March 2012 | Roche, Nicolas |

Europäisches
Patentamt

European
Patent Office

Office européen
des brevets

**EUROPEAN SEARCH REPORT**

Application Number

EP 12 15 0145

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 597 473 B1 (RASMUSSEN D RENE [US] ET AL) 22 July 2003 (2003-07-22)<br>* abstract *<br>* column 3, lines 42-67 *<br>* column 4, lines 21-30 *<br>* column 5, lines 1-6 *<br>* column 6, lines 32-34 *<br>----- | 1-3,6, 9-11 | |
| A | US 2008/151307 A1 (MINAMIDA ET AL.) 26 June 2008 (2008-06-26)<br>* the whole document *<br>----- | 1 | |
| A | US 5 271 096 A (COOK ROBERT L [US]) 14 December 1993 (1993-12-14)<br>* the whole document *<br>----- | 1,5,7,10 | |

TECHNICAL FIELDS
SEARCHED      (IPC)

The present search report has been drawn up for all claims

| Place of search | Date of completion of the search | Examiner |
|---|---|---|
| Berlin | 20 March 2012 | Roche, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 15 0145

This annex lists the patent family members relating to the patent documents cited in the above-mentioned European search report.
The members are as contained in the European Patent Office EDP file on
The European Patent Office is in no way liable for these particulars which are merely given for the purpose of information.

20-03-2012

| Patent document cited in search report | | Publication date | Patent family member(s) | | Publication date |
|---|---|---|---|---|---|
| US 5510896 | A | 23-04-1996 | CA | 2121620 A1 | 19-12-1994 |
| | | | JP | 7038687 A | 07-02-1995 |
| | | | US | 5510896 A | 23-04-1996 |
| US 2005275724 | A1 | 15-12-2005 | US | 6992696 B1 | 31-01-2006 |
| | | | US | 2005275724 A1 | 15-12-2005 |
| US 2010157380 | A1 | 24-06-2010 | JP | 2010148061 A | 01-07-2010 |
| | | | US | 2010157380 A1 | 24-06-2010 |
| US 2004263919 | A1 | 30-12-2004 | JP | 4236035 B2 | 11-03-2009 |
| | | | JP | 2005020555 A | 20-01-2005 |
| | | | US | 2004263919 A1 | 30-12-2004 |
| EP 1104161 | A2 | 30-05-2001 | EP | 1104161 A2 | 30-05-2001 |
| | | | JP | 4708550 B2 | 22-06-2011 |
| | | | JP | 2001177686 A | 29-06-2001 |
| | | | US | 6643035 B1 | 04-11-2003 |
| US 2003053154 | A1 | 20-03-2003 | NONE | | |
| US 6597473 | B1 | 22-07-2003 | NONE | | |
| US 2008151307 | A1 | 26-06-2008 | CN | 101207677 A | 25-06-2008 |
| | | | JP | 2008160284 A | 10-07-2008 |
| | | | US | 2008151307 A1 | 26-06-2008 |
| US 5271096 | A | 14-12-1993 | NONE | | |

EPO FORM P0459